# FASCICULE DE BREVET EUROPEEN

(11) **EP 1 790 878 B1**
(45) Date de publication et mention de la délivrance du brevet: **28.07.2010**
(21) Numéro de dépôt: 06301173.8
(22) Date de dépôt: 23.11.2006
(51) Int. Cl.: F16H 59/04, B60K 20/04, F16H 61/36

(54) **Ensemble support pour levier de commande d'une boîte de vitesses mécaniques de véhicule automobiles**
Befestigungsanordnung für einen Schalthebel eines Kraftfahrzeughandschaltgetriebes
Support assembly for gear shift lever of a manual gear shift transmission for motor vehicles

(30) Priorité: 24.11.2005 FR 0553597
(43) Date de publication de la demande: 30.05.2007
(73) Titulaire: Dura Automotive Systems SAS, 91570 Bièvres (FR)
(72) Inventeur: Pradier, Philippe, 42290 Sorbiers (FR)
(74) Mandataire: Thivillier, Patrick

(56) Documents cités:
- DE-B3- 10 229 059
- FR-A- 2 847 877

## Description

L'invention se rattache au secteur technique des équipements de véhicules automobiles, et plus particulièrement au réglage du levier de commande des boîtes de vitesses mécaniques.

On rappelle, pour une meilleure compréhension de la suite de la description, que la commande de sélection et de passage des vitesses, s'effectue au moyen d'un levier monté avec capacité de déplacement angulaire dans un boîtier support fixé généralement au niveau de l'habitacle du véhicule automobile. Le boîtier présente des agencements pour le montage avec capacité de déplacement multidirectionnel du levier, notamment sous forme d'une articulation sphérique, telle qu'une rotule. L'extrémité inférieure du levier présente des agencements pour assurer, généralement en combinaison avec des organes de renvoi, la sélection et le passage des vitesses par l'intermédiaire de câbles ou de barres.

Par exemple dans une forme de réalisation, l'élément de renvoi de sélection assujetti au levier de commande, est monté avec capacité d'articulation par rapport à un axe. L'axe peut être équipé d'un ressort de rappel monté d'une manière précontrainte autour de l'axe. Les branches du ressort sont sollicitées séparément, sous l'effet de pivotement du levier, par un ergot solidaire de l'élément de sélection coopérant avec une butée fixe. L'axe de pivotement, l'extrémité de l'articulation du levier et la butée fixe constituent trois points de référence qui doivent être alignés.

L'alignement de ces trois points, au moment du montage de la boîte de vitesses, notamment lors de sa liaison avec le levier de commande par l'intermédiaire des éléments de passage et de sélection des vitesses, peut poser des difficultés. La boîte de vitesses étant au point mort, il est nécessaire que le levier de commande soit également livré au point mort. Généralement, d'une manière parfaitement connue pour l'homme du métier, on utilise un élément de blocage connu sous le nom d'outil de méthode et dont le but est de supprimer temporairement la fonction de sélection du levier pour obtenir la meilleure synchronisation possible entre le point mort du levier de commande et la boîte de vitesses.

Le document FR-A-2847877 qui est considéré comme constituant l'état de la technique le plus proche; se rapporte à un dispositif de blocage.

On sait également, lorsque la boîte de vitesses est au point mort, que la course du levier, en relation de la première vitesse, correspond à la course de la boîte. Pour réaliser ce réglage, on peut par exemple agir sur le ressort de rappel monté en combinaison avec l'axe de l'élément de sélection. Cette solution n'est toutefois pas satisfaisante et relativement délicate à réaliser.

L'invention s'est fixée pour but de remédier à ces inconvénients d'une manière simple, sûre, efficace et rationnelle.

Le problème que se propose de résoudre l'invention est de pouvoir régler d'une manière simple et précise la course du levier nécessaire à la sélection de la vitesse afin que cette course corresponde parfaitement à la course que doit faire la boîte de vitesses.

Plus particulièrement, l'invention concerne un ensemble support pour levier de commande du type de ceux présentant une partie apte à faire office de butée audit levier. Cette partie est généralement connue, dans le secteur de l'automobile sous le nom de mur ou de trottoir. Dans ce cas, le levier présente des agencements pour échapper cette butée afin de permettre l'enclenchement de la marche arrière. Par exemple, les agencements du levier peuvent être constitués par une gâchette actionnable manuellement par le conducteur. Ou bien, pour échapper à cette butée, il est nécessaire d'appuyer sur le levier de commande pour enclencher la marche arrière.

En considérant ce type de boîtier ou d'ensemble support, et compte tenu du problème précité à résoudre, à savoir le réglage de la course de sélection du levier pour être en correspondance avec la course que doit faire la boîte de vitesses, selon une caractéristique à la base de l'invention, la partie qui fait office de butée est montée avec capacité de déplacement guidé par rapport au levier pour permettre le réglage de la course de sélection dudit levier à partir de la position point mort en correspondance avec celle de la boîte de vitesses, ledit réglage résultant d'un déplacement de ladite partie au moyen d'un organe de calibrage correspondant à la course souhaitée et de l'immobilisation de ladite partie dans cette position de réglage.

Compte tenu de ces caractéristiques, étant donné que le levier est immobilisé au point mort, il en résulte que le mur ou trottoir se déplace jusqu'à la position garantissant la côte de réglage de la sélection. Il suffit ensuite de bloquer dans cette position de réglage le mur ou trottoir.

Dans une forme de réalisation, pour résoudre le problème posé de permettre le réglage en position de la partie qui fait office de butée, puis son blocage dans la position de réglage, la partie qui fait office de butée présente une semelle d'appui montée avec capacité de réglage en longueur par rapport au levier, ladite semelle étant prolongée dans un plan sensiblement perpendiculaire, par un talon qui constitue la butée en tant que telle.

La semelle présente des agencements pour son réglage en longueur par rapport à des organes de fixation.
Les agencements sont constitués par des lumières oblongues au travers desquelles sont engagés les organes de fixation.

Pour résoudre le problème posé de permettre le déplacement du mur qui fait office de butée selon une course correspondant à celle de la boîte de vitesses, le talon présente des agencements pour le montage de l'organe de calibrage en combinaison avec le levier qui est immobilisé au point mort. L'organe de calibrage est un outil de méthode.

Ce mode de réalisation est particulièrement utilisé lorsque la commande n'a pas de ressort de rappel de sélection.

En effet, lorsque la commande bénéficie d'un ressort de rappel de sélection, ce dernier constitue la référence de réglage du trottoir mobile.

L'invention est exposée ci-après plus en détail à l'aide des figures des dessins annexés dans lesquels :

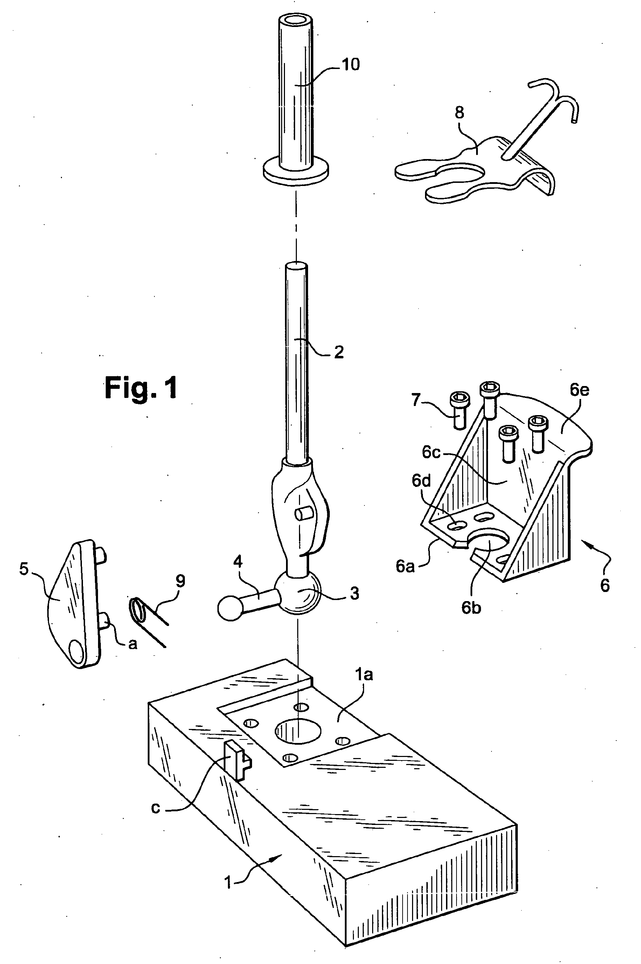

- la figure 1 est une vue en perspective, à caractère schématique montrant, avant montage, des principaux éléments de l'ensemble support du levier de commande, selon l'invention ;

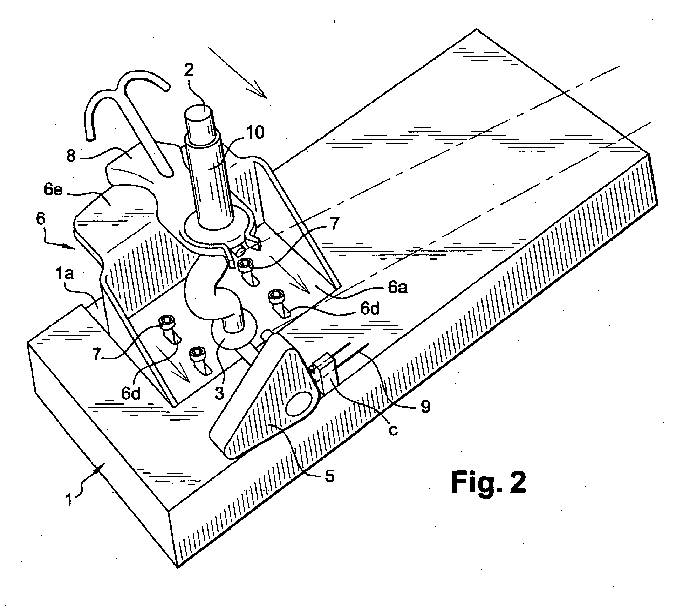

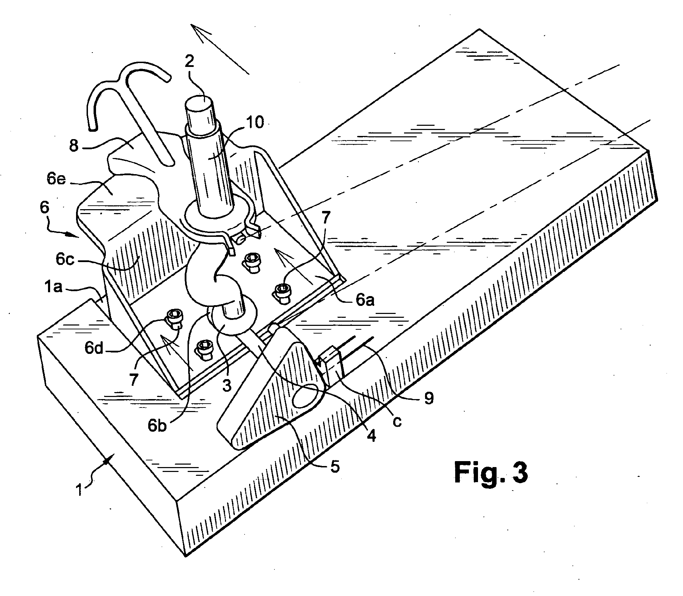

- les figures 2 et 3 sont des vues en perspective montrant le réglage du mur ou trottoir que présente l'ensemble du boîtier par rapport au levier bloqué au point mort.

Pour une plus grande clarté des dessins, on a illustré une partie seulement de l'ensemble du boîtier désigné par (1). Ce boîtier ou ensemble support (1) présente, d'une manière parfaitement connue pour un homme du métier, des agencements pour le montage, avec capacité d'articulation, d'un levier de commande (2) pour le passage et la sélection des vitesses. Le montage, avec capacité de déplacement multidirectionnel du levier (2), s'effectue au moyen d'une rotule (3) qui peut présenter un doigt (4) qui fait office d'axe pour l'accouplement d'un élément de renvoi et de sélection (5). Ces différentes dispositions ne sont pas décrites en détail car parfaitement connues pour un homme du métier, et ne font pas partie de l'objet spécifique de l'invention.

Selon une caractéristique à la base de l'invention, l'ensemble support (1) reçoit, avec capacité de déplacement en translation, une partie (6) connue sous le nom de mur ou trottoir, qui fait office de butée au levier (2) pour éviter d'enclencher inopinément la marche arrière. En effet, pour échapper le mur, il est nécessaire d'agir sur le levier qui peut, par exemple, présenter, comme indiqué, une gâchette (10) ou autre agencement.

Il apparaît donc que la partie (6) qui fait office de butée est montée avec capacité de déplacement guidé par rapport au levier (2) pour permettre le réglage de la course de sélection dudit levier (2), à partir de sa position point mort, en correspondance avec celle de la boîte de vitesses.

Comme il sera indiqué dans la suite de la description, ce réglage résulte d'un déplacement du mur ou trottoir (6) au moyen d'un organe de calibrage correspondant à la course souhaitée du mur ou trottoir, qui est ensuite bloqué dans la position de réglage.

La partie qui fait office de butée (6) sera appelée, dans la suite de la description, « mur ». Ce mur (6) présente une semelle d'appui (6a) montée avec capacité de déplacement guidé dans une empreinte complémentaire (1a) que présente l'ensemble support (1). Cette semelle (6a) présente des agencements (6b) pour le montage et l'engagement du levier (2) au niveau de la rotule (3). La semelle (6a) est prolongée, dans un plan sensiblement perpendiculaire, par un talon (6c) qui constitue la butée en tant que telle. Des lumières oblongues (6d) sont formées dans l'épaisseur de la semelle (6) pour l'engagement d'organes de serrage (7) vissés dans l'ensemble support (1), notamment dans l'empreinte de guidage (1a).
Il en résulte, après montage du mur (6) dans l'empreinte (1a) de l'ensemble support (1) et avant serrage des organes (7) que le mur peut être déplacé en translation par rapport au levier (2) compte tenu des lumières oblongues (6d).

Compte tenu de ces caractéristiques, pour résoudre le problème posé de régler la course du levier de commande (2) en correspondance avec la course de la boîte de vitesses, il suffit de bloquer le levier en position point mort, afin de provoquer, d'une manière concomitante, au moyen de l'organe de calibrage, le déplacement du mur (6) puis d'assurer son blocage dans cette position de réglage (figure 6).
Généralement, l'organe de calibrage utilisé est, comme indiqué dans la partie introductive de la description, un outil de méthode (8). On rappelle également que l'axe d'articulation de l'élément de sélection (5) peut être assujetti à un ressort de rappel (9).

Lorsque la commande bénéficie du ressort de rappel (9), ce dernier pilote la position de l'ensemble de la mécanique au point mort. Ce ressort constitue donc la référence de réglage du trottoir mobile (6). L'ensemble de la chaîne cinématique entre la boîte de vitesses et le levier (2) est entièrement bloqué en position, à l'exception du trottoir mobile (6), lorsque les organes d'assemblage (7) ne sont pas serrés.
Le ressort de sélection (9) permet d'aligner naturellement l'axe de rotation (a) du renvoi de sélection (5) avec le doigt (4) de sélection et une partie fixe (c) de l'ensemble support (1) coopérant avec les branches dudit ressort (9) et, d'une manière concomitante, d'orienter angulairement l'ensemble levier (2) - gâchette (10) autour de la sphère (3) dudit levier.
La mise en place de l'outil de méthode (8) par rapport au levier (2) et au mur (6), assure, d'une manière correspondante, le déplacement du mur (6) garantissant ainsi la côte de la course de réglage. Il suffit ensuite de bloquer en position le mur (6) au moyen des vis (7).

D'une manière avantageuse, on observe que cette solution évite d'exercer toutes contraintes au niveau des branches ressort (9). De telles contraintes pourraient provoquer le déplacement angulaire de l'élément de sélection et par conséquent le désalignement des trois points générant un mauvais synchronisme au niveau du levier de commande et de la boîte de vitesses.

Si la commande n'a pas de ressort de rappel de sélection, les références de réglage de l'ensemble peuvent être constituées par le point mort du levier (2). Le blocage en position point mort du levier par rapport au point de fixation de la commande, est réalisé par l'outil de méthode (8) sur la ligne d'assemblage. Comme précédemment, l'ensemble de la cinématique est entièrement bloqué à l'exception du mur mobile (6), si les organes d'assemblage (7) ne sont pas serrés.

La mise en place de l'outil de méthode (8) oriente angulairement l'ensemble levier (2) - gâchette (10) autour de la sphère (3) du levier, la partie doigt de sélection et le renvoi de sélection. La mise en place de l'outil de méthode (8) provoque automatiquement le positionnement du mur mobile (6) garantissant la côte de réglage de sélection. Il suffit ensuite de bloquer dans cette position de réglage le mur (6) au moyen des vis (7).

A noter que le talon (6c) du mur mobile (6) présente des agencements (6e) pour le montage de l'outil méthode (8) en combinaison avec l'ensemble levier (2) - gâchette (10).

Les avantages ressortent bien de la description.

## Revendications

1. Ensemble support (1) pour levier de commande (2) d'une boîte de vitesses mécaniques de véhicules automobiles présentant des agencements pour le montage avec capacité d'articulation dudit levier (2) assujetti à des organes de passage et de sélection (5) de vitesses, ledit ensemble (1) étant équipé d'une partie (6) apte à faire office de butée au levier qui présente des agencements pour échapper ladite butée afin de permettre l'enclenchement de la marche arrière,
**caractérisé en ce que** la partie (6) qui fait office de butée est montée avec capacité de déplacement guidé par rapport au levier (2) pour permettre le réglage de la course de sélection dudit levier (2) à partir de la position point mort en correspondance avec celle de la boîte de vitesses, ledit réglage résultant d'un déplacement de ladite partie (6) au moyen d'un organe de calibrage (8) correspondant à la course souhaitée et de l'immobilisation de ladite partie (6) dans cette position de réglage.

2. Ensemble selon la revendication 1, **caractérisé en ce que** la partie (6) qui fait office de butée présente une semelle d'appui (6a) montée avec capacité de réglage en longueur par rapport au levier (2), ladite semelle (6a) étant prolongée dans un plan sensiblement perpendiculaire, par un talon (6c) qui constitue la butée en tant que telle.

3. Ensemble selon la revendication 2, **caractérisé en ce que** la semelle (6a) présente des agencements (6d) pour son réglage en longueur par rapport à des organes de fixation (7).

4. Ensemble selon la revendication 3, **caractérisé en ce que** les agencements (6d) sont constitués par des lumières oblongues au travers desquelles sont engagés les organes de fixation (7).

5. Ensemble selon la revendication 2, **caractérisé en ce que** le talon (6c) présente des agencements (6e) pour le montage de l'organe de calibrage (8) en combinaison avec le levier (2) qui est immobilité au point mort.

6. Ensemble selon la revendication 5, **caractérisé en ce que** l'organe de calibrage (8) est un outil de méthode.

7. Ensemble selon la revendication 1, **caractérisé en ce que** l'organe de calibrage est constitué par un ressort (9) monté sur un axe recevant l'organe de sélection (5) des vitesses.

## Claims

1. Support unit (1) for a control lever (2) of a mechanical gear box for motor vehicles that has fitting arrangements capable of articulating said lever (2) secured to components for running through and selecting (5) gears, said unit (1) being equipped with a part (6) capable of acting as a thrust block for the lever which has arrangements for escaping said thrust block to permit the engagement of reverse gear,
**characterized in that** the part (6) acting as a thrust block is fitted with capability for guided movement relative to the lever (2) so that the selection stroke of said lever (2) can be adjusted from the neutral position in correspondence with that of the gearbox, said adjustment resulting from moving said part (6) by means of a calibration component (8) corresponding to the required stroke and from immobilizing said part (6) in this adjustment position.

2. Unit as claimed in claim 1, **characterized in that** the part (6) acting as a thrust block has a support soleplate (6a) fitted with length adjustment capability relative to the lever (2), said soleplate (6a) being extended in a substantially perpendicular plane, by a heel (6c) which constitutes the thrust block as such.

3. Unit as claimed in claim 2, **characterized in that** the soleplate (6a) has arrangements (6d) for the length adjustment thereof relative to fastening components (7).

4. Unit as claimed in claim 3, **characterized in that** the arrangements (6d) are constituted by oblong apertures through which the fastening components (7) are engaged.

5. Unit as claimed in claim 2, **characterized in that** the heel (6c) has arrangements (6e) for fitting the calibration component (8) in combination with the lever (2) which is immobilized in neutral.

6. Unit as claimed in claim 5, **characterized in that** the calibration component (8) is a method tool.

7. Unit as claimed in claim 1, **characterized in that** the calibration component is constituted by a spring (9) mounted on an axis accommodating the gear selection component (5).

## Patentansprüche

1. Unterbau (1) für Schalthebel (2) eines mechanischen Getriebes für Automobile mit Vorkehrungen für die gelenkige Montage des besagten Hebels (2) abhängig von Bauteilen für die Gangschaltung und Gangwahl (5), wobei der Unterbau (1) mit einem Teil (6) versehen ist, das als Anschlag für den Hebel dienen kann, der Vorkehrungen aufweist, um den besagten Anschlag zu umgehen und den Rückwärtsgang einzulegen,
**dadurch gekennzeichnet, dass** der als Anschlag dienende Teil (6) mit geführter Bewegungsfähigkeit gegenüber dem Hebel (2) angebracht ist, um die Einstellung des gewählten Hubs des Hebels (2) ausgehend von der Nullposition in Entsprechung zum Hub des Getriebes zu ermöglichen, wobei die Einstellung aus einer Verlagerung des besagten Teils (6) mit Hilfe eines Kalibriermittels (8) entsprechend dem gewünschten Laufweg und der Blockierung des besagten Teils (6) in dieser Einstellposition resultiert.

2. Unterbau nach Anspruch 1, **dadurch gekennzeichnet, dass** der als Anschlag dienende Teil (6) eine Auflagesohle (6a) aufweist, die in der Länge gegenüber dem Hebel (2) verstellbar angebracht ist, wobei die besagte Sohle (6a) in einer ziemlich genau dazu senkrechten Ebene durch einen Absatz (6c) fortgesetzt wird, der den Anschlag als solchen bildet.

3. Unterbau nach Anspruch 2, **dadurch gekennzeichnet, dass** die Sohle (6a) Vorkehrungen (6d) für ihre Längeneinstellung gegenüber Befestigungsmitteln (7) aufweist.

4. Unterbau nach Anspruch 3, **dadurch gekennzeichnet, dass** die Vorkehrungen (6d) aus länglichen Schlitzen bestehen, durch welche die Befestigungsmittel eingeführt werden (7).

5. Unterbau nach Anspruch 2, **dadurch gekennzeichnet**, das der Absatz (6c) Vorkehrungen (6e) für die Montage des Kalibriermittels (8) in Verbindung mit dem im Nullpunkt blockierten Hebel (2) aufweist.

6. Unterbau nach Anspruch 5, **dadurch gekennzeichnet** (8), dass das Kalibriermittel ein Methodeninstrument ist.

7. Unterbau nach Anspruch in 1, **dadurch gekennzeichnet, dass** das Kalibriermittel aus einer Feder (9) besteht, die auf einer das Gangwahlmittel (5) aufnehmenden Achse angebracht ist.
